# EUROPÄISCHE PATENTSCHRIFT

(11) **EP 0 690 078 B1**
(45) Veröffentlichungstag und Bekanntmachung des Hinweises auf die Patenterteilung: **21.03.2001**
(21) Anmeldenummer: 95115275.0
(22) Anmeldetag: 04.07.1990
(51) Int. Cl.: C08F 32/08, C08G 61/08, C08F 10/00

(54) **Cycloolefinpolymere**
Cycloolefin polymers
Polymères de cyclooléfines

(30) Priorität: 08.07.1989 DE 3922546
(43) Veröffentlichungstag der Anmeldung: 03.01.1996
(62) Teilanmeldung aus: 90112732.4
(73) Patentinhaber: Ticona GmbH, 65451 Kelsterbach (DE)
(72) Erfinder: Brekner, Michael-Joachim, Dr., D-60529 Frankfurt (DE); Rohrmann, Jürgen, Dr., D-65779 Kelkheim (DE); Spaleck, Walter Dr., D-65835 Liederbach (DE); Antberg, Martin, Dr., D-65719 Hofheim (DE)

(56) Entgegenhaltungen:
- EP-A- 0 283 164
- EP-A- 0 291 970
- EP-A- 0 304 671
- EP-A- 0 316 155
- EP-A- 0 358 103
- DE-A- 3 835 044

## Beschreibung

Die Erfindung bezieht sich auf ein Cycloolefinpolymer, das durch ein Verfahren zur Herstellung von Cycloolefinpolymeren erhältlich ist, wobei keine Ringöffnung erfolgt.

Es ist bekannt, daß polycyclische Olefine mittels verschiedener Ziegler-Katalysatoren polymerisiert werden können. Die Polymerisation verläuft in Abhängigkeit vom Katalysator über Ringöffnung (vgl. US 3 557 072 und US 4 178 424) oder Öffnung der Doppelbindung (vgl. EP 156 464, EP 283 154, EP 291 208, EP 291 970).

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung führt bei cyclischen Olefinen zu einer relativ niederen Polymerisationsgeschwindigkeit (Umsatzrate).

Als Katalysator läßt sich bei monocyclischen Olefinen eine stereorigide chirale Metallocenverbindung wie Ethylen-bis(indenyl)zirkoniumdichlorid verwenden, wobei die Polymerisation unter Erhalt des Ringes erfolgt (vgl. EP 304 671).

Bei den aus den vorgenannten Druckschriften bisher bekannten Propylencopolymeren liegt die Viskositätszahl unterhalb 20 cm³/g und die Glastemperatur der Copolymeren von Ethylen mit Norbornen übersteigt nicht 100°C.

Die Erfindung betrifft ein Cycloolefinpolymer, das erhältlich ist durch Polymerisation von 0,1 Gew.-% bis 100 Gew.-% Norbornen und 0 Gew.-% bis 99.9 Gew.-% Ethylen in Lösung, in Suspension, in Monomerschmelze oder in der Gasphase bei einer Temperatur von -20 °C bis 80 °C und bei einem Druck von 0,5 bar bis 64 bar in Gegenwart eines Katalysators, welcher aus einem Metallocen als Übergangsmetallkomponente und einem Aluminoxan der Formel (VII) 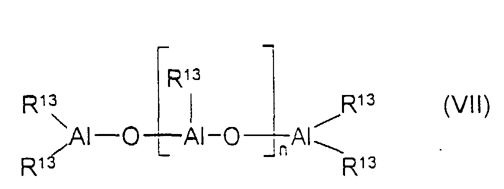 für den linearen Typ und/oder der Formel (VIII) 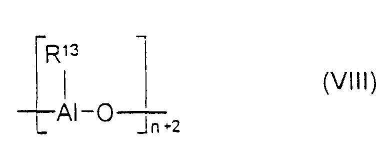 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Ubergangsmetallkomonente eine Verbindung der Formel IX 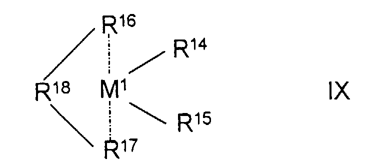 ist, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R¹⁶ und R¹⁷: verschieden sind und einen ein- oder mehrkernigen Kohlenwasserstoffrest, welcher mit dem Zentralatom M¹ eine Sandwichstruktur bilden kann, bedeuten,
- R¹⁸: 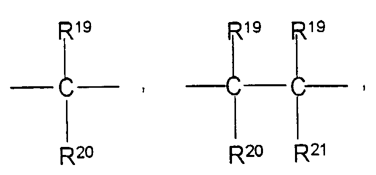 ist, wobei R¹⁹, R²⁰ und R²¹ gleich oder verschieden sind und ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-AlkoxygnJppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden.

Norbornen wird in einer Menge von 0,1 GeW.-% bis 100 Gew.% und Ethylen wird in einer Menge von 0 Gew.-% bis 99,9 Gew.-%, jeweils bezogen auf die Gesamtmenge der Monomeren eingesetzt.

Die Monomeren werden vorzugsweise in folgenden Mengenverhältnissen eingesetzt:
das molare Monomerverhältnis polycyclisches Olefin (I bis IV) zu 1-Olefin (VI) beträgt in den entsprechenden Polymeren 1 : 99 bis 99 : 1, vorzugsweise 20 : 80 bis 80 : 20.

Der für das erfindungsgemäße Verfahren zu verwendende Katalysator besteht aus einem Aluminoxan und mindestens einem Metallocen der Formel IX

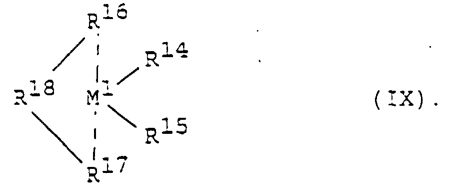

In Formel IX ist M¹ vorzugsweise Zirkon und Hafnium.

R¹⁴ und R¹⁵ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R¹⁶ und R¹⁷ sind verschieden und bedeuten einen ein- oder mehrkernigen Kohlenwasserstoffrest, welcher mit dem Zentralatom M¹ eine Sandwichstruktur bilden kann.

Bevorzugt sind R¹⁶ Fluorenyl und R¹⁷ Cyclopentadienyl .

R¹⁸ ist vorzugsweise =CR¹⁹R²⁰.

Die Metallocene können nach folgendem Reaktionsschema hergestellt werden: 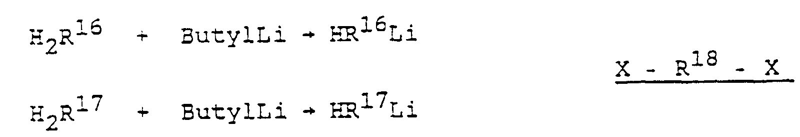 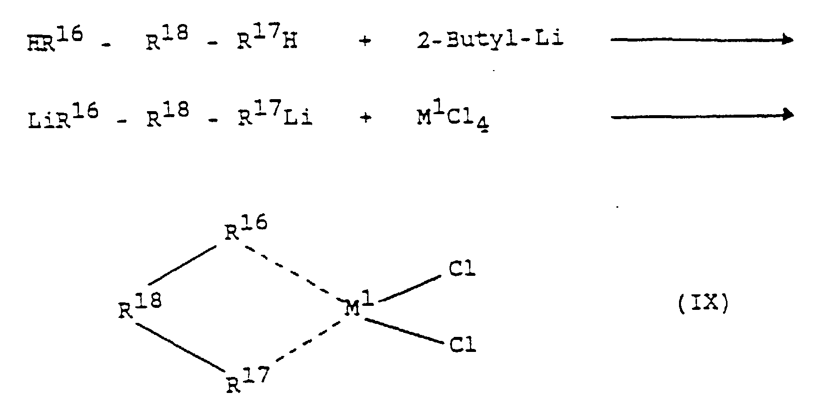 oder 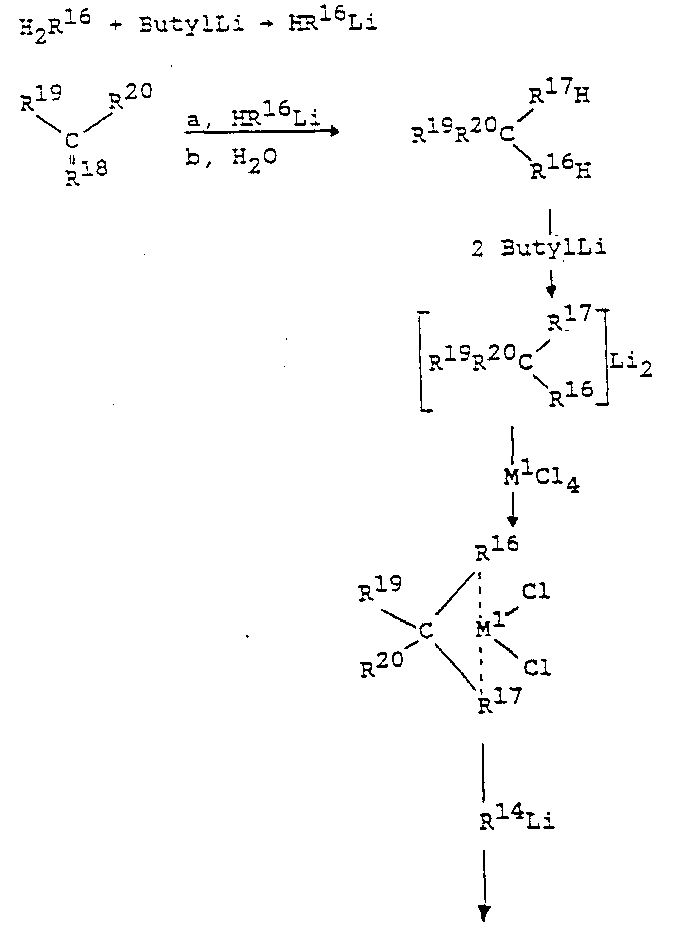 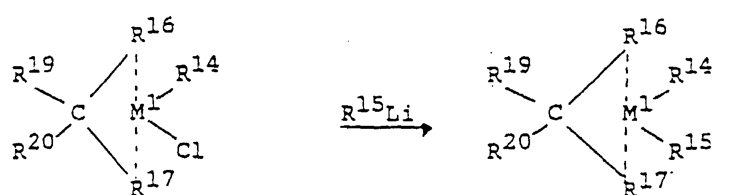 Das obige Reaktionsschema gilt selbstverständlich auch für die Fälle R¹⁶ = R¹⁷ und/oder R¹⁹ = R²⁰ und/oder R¹⁴ = R¹⁵,

Bevorzugt eingesetzte Metallocene sind:
Diphenylmethylen- (9-fluorenyl)-cyclopentadienyl-zirkondichlorid,
Isoprcpylen-(9-fluorenyl)-cyclopentadienyl-zirkondichlorid oder deren Gemische.

Der Cokatalysator ist ein Aluminoxan der Formel VII 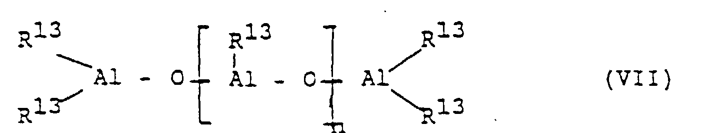 für den linearen Typ und/oder der Formel VIII 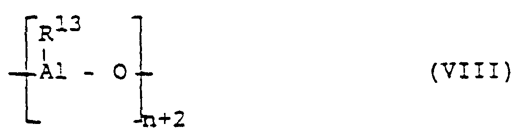 für den cyclischen Typ. In diesen Formeln bedeutet R¹³ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren-kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1- und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(sO₄)₃,

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in einem für das Ziegler - Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol.

Schließlich kann auch das zu polymerisierende Monomere als Lösemittel oder Suspensionsmittel eingesetzt werden. Im Falle von Norbornen werden derartige Massepolymerisationen bei einer Temperatur oberhalb 45°C durchgeführt. Die Molmasse des Polymerisats kann in bekannter Weise geregelt werden; vorzugsweise wird dazu Wasserstoff verwendet.

Die Polymerisation wird in bekannter Weise in Lösung, in Suspension oder in der Gasphase, kontinuierlich oder diskontinuierlich, ein- oder mehrstufig bei einer Temperatur von -20 bis 80°C, durchgeführt. Der Druck beträgt 0,5 bis 64 bar und wird entweder durch die gasförmigen Olefine oder mit Hilfe von Inertgas erhalten.

Besonders vorteilhaft sind kontinuierliche sowie mehrstufige Verfahren, weil sie einen rationalen Einsatz des polycyclischen Olefins ermöglichen. Auch läßt sich bei kontinuierlichen Verfahren das polycyclische Olefin, welches als Restmonomer zusammen mit dem Polymeren anfallen kann, zurückgewinnen und wieder dem Reaktionsgemisch zuführen.

Dabei wird die Metallocenverbindung in einer Konzentration, bezogen auf das Übergangsmetall, von 10⁻³ bis 10⁻⁷, vorzugsweise 10⁻⁵ bis 10⁻⁶ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 · 10⁻² mol pro dm³ Reaktorvolumen verwendet, bezogen auf den Gehalt an Aluminium. Prinzipiell sind aber auch höhere Konzentrationen möglich. Um die Polymerisationseigenschaften verschiedener Metallocene zu kombinieren, ist es möglich, Gemische mehrerer Metallocene einzusetzen.

Gegenüber dem bekannten Stand der Technik zeichnet sich das erfindungsgemäße Verfahren dadurch aus, daß die bevorzugt verwendeten Zirkoniumverbindungen in verdünnter Lösung sehr temperaturstabil sind, so daß sie auch bei Temperaturen bis 80°C eingesetzt werden können.

Bei der Herstellung von Copolymerisaten kann die Variation der Molverhältnisse des polycyclischen Olefins zum eingesetzten 1-Olefin in einem weiten Bereich erfolgen. Durch die Wahl der Polymerisationstemperatur, durch die Konzentration der Katalysatorkomponenten und das eingesetzte Molverhältnis läßt sich die Einbaurate an Comonomer nahezu beliebig steuern. Bei Norbornen wird eine Einbaurate von mehr als 40 mol% erreicht.

Die mittlere Molmasse des gebildeten Copolymers läßt sich durch Variation der Katalysatorkonzentration oder der Temperatur in bekannter Weise variieren.

Die Polydispersität M_{w}/Mₙ der Copolymeren ist mit Werten zwischen 2,9 - 6,0 (4,5) recht eng, unterscheidet sich aber von den Molmassenverteilungen der mit diesem Katalysatorsystem hergestellten Polyethylene und Polypropylene M_{w}/Mₙ = 2 deutlich. Dadurch resultiert ein Eigenschaftbild der Polymerisate, das diese für das Spritzgießen besonders geeignet macht.

Bei der Copolymerisation der polycyclischen Olefine mit den acyclischen Olefinen, insbesondere mit Propylen, entstehen Polymere mit einer Viskositätszahl größer 20 cm³/g. Bei Copolymeren von Norbornen mit acyclischen Olefinen, insbesondere Ethylen, liegt die Glastemperatur oberhalb 100°C.

Bei der Polymerisation von Cyclopenten entstehen, aufgrund der Eigenschaften des Ethylen-bis-(1-indenyl)-zirkondichlorid-Katalysators, Polymere mit hohem stereoregulären Aufbau. Es ist anzunehmen, daß auch die anderen mittels des erfindungsgemäßen Verfahrens hergestellten Polymeren eine hohe Stereoregularität in ihrem Aufbau aufweisen.

Mit dem beschriebenen Verfahren lassen sich amorphe Copolymere herstellen. Die Copolymeren sind transparent und hart. Sie sind beispielsweise in Dekahydronaphthalin bei 135°C und in Toluol bei Raumtemperatur löslich. Die erfindungsgemäßen Polymeren sind thermoplastisch verarbeitbar. Sowohl beim Extrudieren als auch beim Spritzgießen wurde kein bemerkenswerter Abbau oder Viskositätsaufbau gefunden.

Die erfindungsgemäßen Materialien eignen sich besonders zur Herstellung von Extrusionsteilen wie Folien, Schläuchen, Rohren, Stangen und Fasern als auch zur Herstellung von Spritzgußartikeln beliebiger Form und Größe. Eine wichtige Eigenschaft der erfindungsgemäßen Materialien ist ihre Transparenz. Dadurch kommen besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,545. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die erfindungsgemäßen Polyneren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:
Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt.

### Beispiel 1

### Darstellung von Diphenylmethylen(9-fluorenyl)-cyclopentadienyl-zirkondichlorid - (Metallocen L)

Eine Lösung von 5,10 g (30,7 mmol) Fluoren in 60 cm³ THF wurde bei Raumtemperatur mit 12,3 cm³ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 cm³ Wasser zugesetzt, wobei sich die Lösung gelb färbte, und die Lösung ausgeethert. Die über MgSO₄ getrocknete Etherphase wurde eingeengt und bei -35°C der Kristallisation überlassen. Man erhielt 5,1 g (42 %) 1,1-Cyclopentadienyl-(9-fluorenyl)-diphenylmethan als beiges Pulver.

2,0 g (5,0 mmol) der Verbindung wurden in 20 cm³ THF gelöst und bei 0°C mit 6,4 cm³ (10 mmol) einer 1,6 molaren Lösung von Butyllithium in Hexan versetzt. Nach 15 min Rühren bei Raumtemperatur wurde das Lösemittel abgezogen, der rote Rückstand im Ölpumpenvkauum getrocknet und mehrmals mit Hexan gewaschen. Nach dem Trocknen im Ölpumpenvakuum wurde das rote Pulver bei -78°C zu einer Suspension von 1,16 g (5,00 mmol) ZrCl₄ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 cm³ CH₂Cl₂ gewaschen, im Ölpumpenvakuum getrocknet und mit 120 cm³ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeengt und bei -35°C der Kristallisation überlassen. Aus CH₂Cl₂ kristallisieren weitere 0,45 g des Komplexes.

Gesamtausbeute 1,0 g (36 %). Korrekte Elementaranalysen. Das Massenspektrum zeigte M⁺ = 556. ¹H-NMR-Spektrum (100 MHz, CDCl₃): 6,90 - 8,25 (m, 16, Flu-H, Ph-H), 6,40 (m, 2, Ph-H), 6,37 (t, 2, Cp-H), 5,80 (t, 2, Cp-H).

### Beispiel 2

### Darstellung von Isopropylen -(9-fluorenyl)-cyclopentadienyl-zirkondichlorid - (Metallocen M)

Metallocen M wurde in Anlehnung an die Literaturstelle J. Am. Chem. Soc. 110 (1988) 6255 hergestellt.

### Beispiel 3 (nicht erfindungsgemäβ)

Ein sauberer und trockener 1,5 dm³-Polymerisationsreaktor mit Rührer wurde mit Stickstoff und dann mit Ethylen gespült und mit einer Lösung von 25 g Norbornen in 750 cm³ Toluol gefüllt. Unter Rühren wurde dann der Reaktor auf eine Temperatur von 20°C gebracht und 1 bar Ethylen aufgedrückt.

Danach wurden 20 cm³ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 20°C gerührt, wobei durch Nachdosieren der Ethylendruck bei 1 bar gehalten wurde (Sättigung des Toluols mit Ethylen). Parallel dazu wurden 30,5 mg Metallocen A in 10 cm³ toluolischer Methylaluminoxanlösurg (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 1 Stunde bei 20°C polymerisiert, wobei der Ethylendruck durch Nachdosieren bei 1 bar gehalten wurde. Dann wurde der Reaktorinhalt schnell in ein Rührgefäß abgelassen, in dem 100 cm³ Isopropanol vorgelegt waren. Diese Mischung wurde mit 2 dm³ Aceton versetzt, 10 min gerührt und dann der suspendierte polymere Feststoff abfiltriert. Das abfiltrierte Polymer wurde dann in 300 cm³ einer Mischung aus zwei Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80°C und 0,2 bar 15 Stunden getrocknet. Es wurde eine Produktmenge von 55 g erhalten. An dem Produkt wurde eine Viskositätszahl VZ von 244 cm³/g und eine Glastemperatur Tg von 32°C gemessen.

### Beispiele 4-5

Es wurden Polymerisationsversuche analog Beispiel 3 durchgeführt. Gegenüber Beispiel 3 wurden variiert:
- Art des eingesetzten Metallocens
- Menge des eingesetzten Metallocens.

Alle anderen Parameter blieben konstant. Variierte Parameter und Polymerisationsergebnisse zeigt Tabelle 2.

### Beispiele 7-10

Es wurden Polymerisationsversuche analog Beispiel 6 durchgeführt. Gegenüber Beispiel 6 wurden variiert:
- Art des eingesetzten Metallocens
- Menge des eingesetzten Metallocens.
- Menge des eingesetzten Norbornens
- Polymerisationstemperatur (T).

**Tabelle 1**

| Verbindung | Kurzbezeichnung |
|---|---|
| rac-Dimethylsilyl-bis-(1-indenyl)-zirkondichlorid | Metallocen A |
| Diphenylmethylen-(9-fluorenyl)-cyclopentadienyl- zirkondichlorid | Metallocen L |
| Isopropylen-(9-fluorenyl)-cyclopentadienyl-zirkondichlorid | Metallocen M |

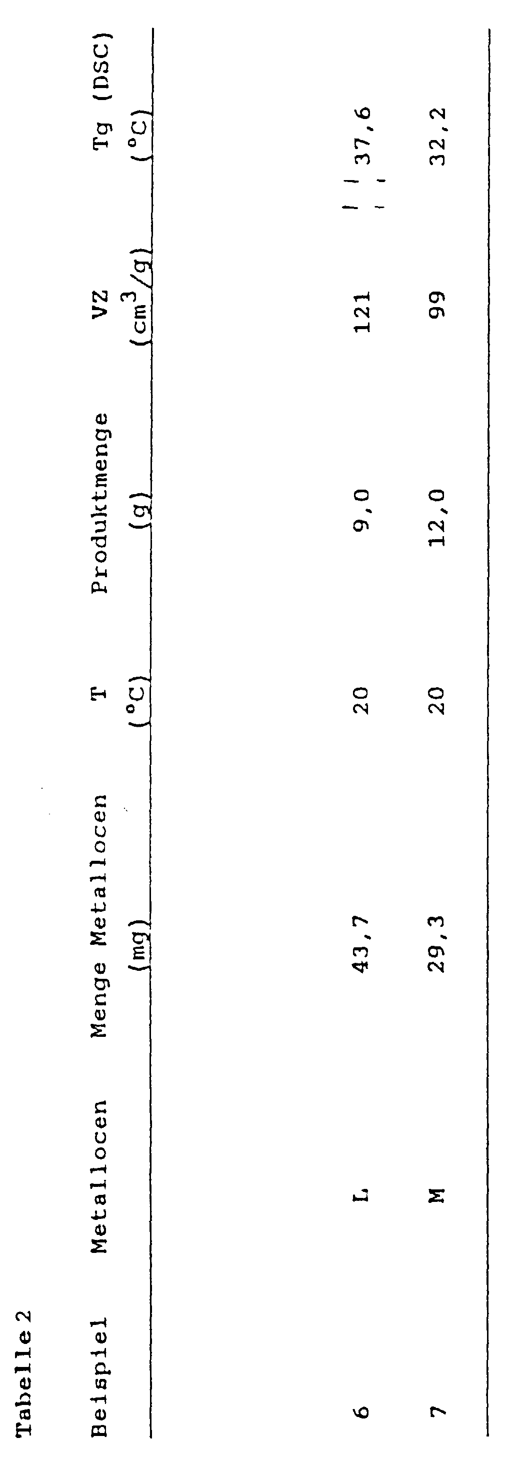

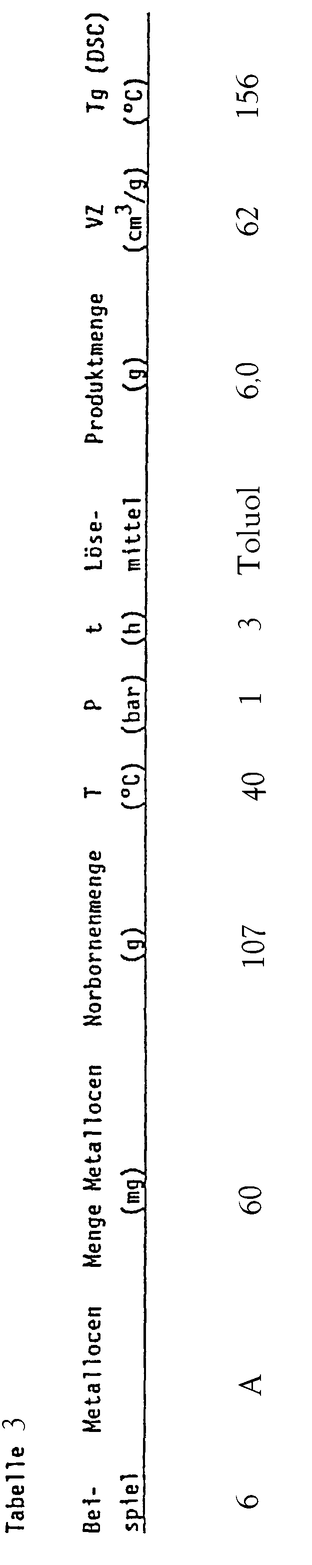

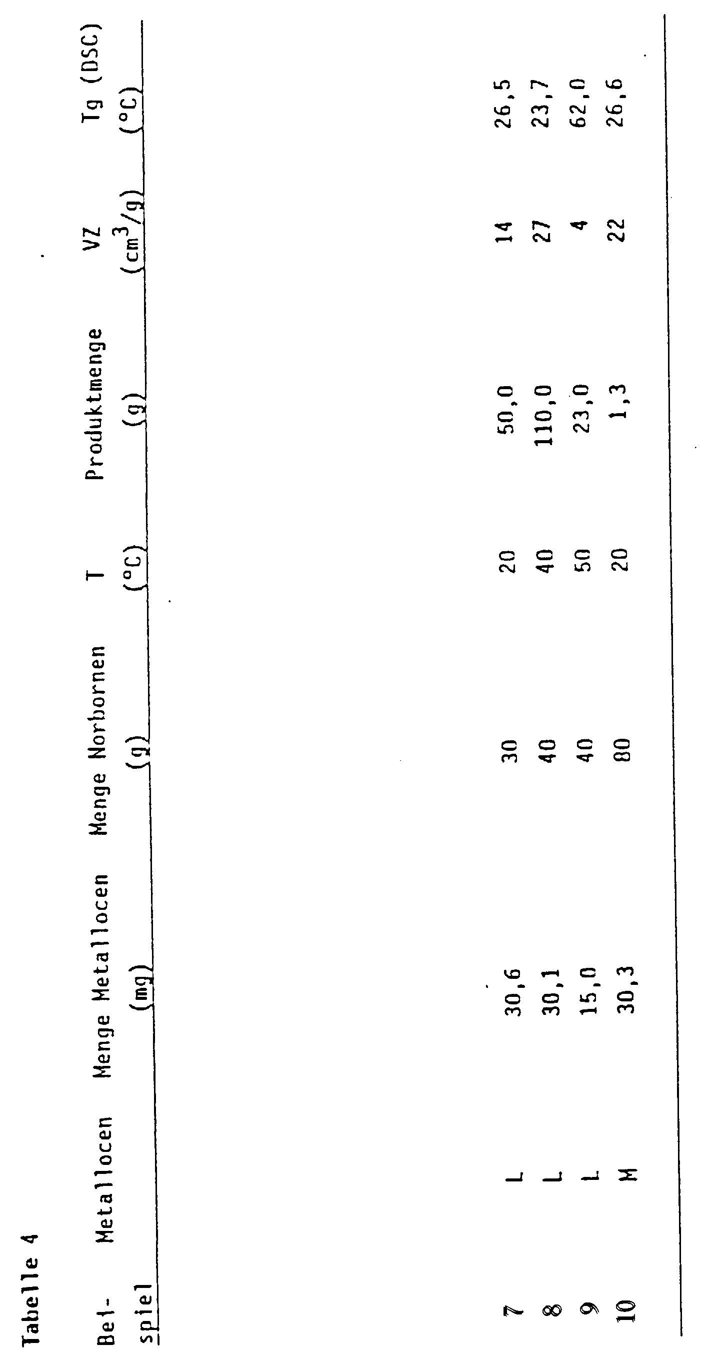

## Patentansprüche

1. Cycloolefinpolymer erhältlich durch Polymerisation von 0,1 Gew.-% bis 100 Gew.-% Norbornen und 0 Gew.-% bis 99,9 Gew.-% Ethylen in Lösung, in Suspension, in Monomerschmelze oder in der Gasphase bei einer Temperatur von -20 °C bis 80 °C und bei einem Druck von 0,5 bar bis 64 bar in Gegenwart eines Katalysators, welcher aus einem Metallocen als Übergangsmetallkomponente und einem Aluminoxan der Formel (VII) 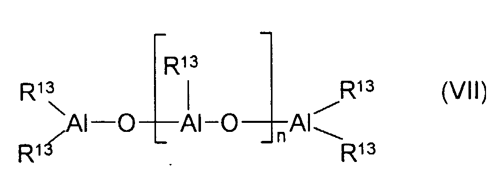 für den linearen Typ und/oder der Formel (VIII 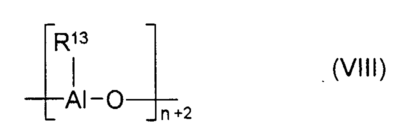 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel IX 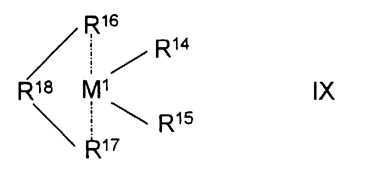 ist, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹⁶ und R¹⁷ verschieden sind und einen ein- oder mehrkernigen Kohlenwasserstoffrest, welcher mit dem Zentralatom M¹ eine Sandwichstruktur bilden kann, bedeuten,
R¹⁸ 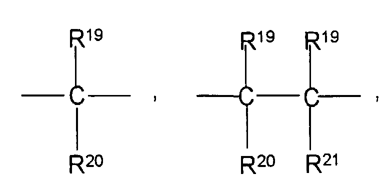 Ist, wobei R¹⁹, R²⁰ und R²¹ gleich oder verschieden sind und ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden.

2. Cycloolefinpolymer erhältlich durch die Polymerisation gemäß Anspruch 1, wobei der Gehalt an Norbornen-Einheiten mehr als 40 mol-% beträgt.

3. Extrusionsteil, enthaltend mindestens ein Cycloolefinpolymer nach Anspruch 1 oder 2.

4. Spritzgußteil, enthaltend mindestens ein Cycloolefinpolymer nach Anspruch 1 oder 2.

5. Polymerlegierung, enthaltend mindestens ein Cycloolefinpolymer nach Anspruch 1 oder 2.

## Claims

1. A cycloolefin polymer obtainable by polymerizing 0.1 to 100 % by weight of norbornene and 0 to 99.9 % by weight of ethylene in solution, in suspension, in a monomer melt or in the gas phase, at a temperature of -20°C to 80°C and under a pressure of 0.5 to 64 bar, in the presence of a catalyst which is composed of a metallocene as the transition metal component and an aluminoxane of the formula (VII) 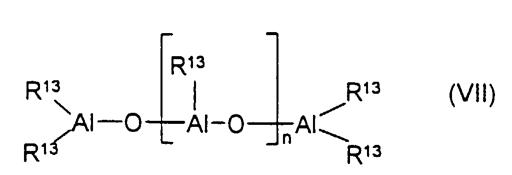 for the linear type, and/or of the formula (VIII) 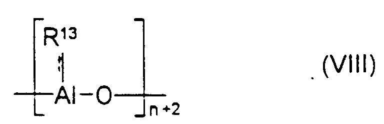 for the cyclic type, R¹³ in the formulae VII and VIII denoting a C₁-C₆-alkyl group or phenyl or benzyl and n being an integer from 2 to 50, which comprises carrying out the polymerization in the presence of a catalyst the transition metal component of which is a compound of the formula IX 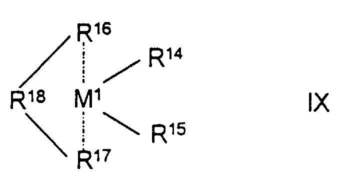 in which
M¹ is titanium, zirconium, hafnium, vanadium, niobium or tantalum,
R¹⁴ and R¹⁵ are identical or different and denote a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹⁶ and R¹⁷ are different and denote a mononuclear or polynuclear hydrocarbon radical which can form a sandwich structure together with the central atom M¹,
R¹⁸ is 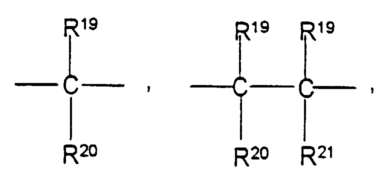
R¹⁹, R²⁰ and R²¹ being identical or different and denoting a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹⁹ and R²⁰ or R¹⁹ and R²¹, in each case with the atoms linking them, forming a ring.

2. A cycloolefin polymer obtainable by the polymerization as claimed in claim 1 and containing more than 40 mol% of norbornene units.

3. An extruded part comprising at least one cycloolefin polymer as claimed in claim 1 or 2.

4. An injection-molded part comprising at least one cycloolefin polymer as claimed in claim 1 or 2.

5. A polymer alloy comprising at least one cycloolefin polymer as claimed in claim 1 or 2.

## Revendications

1. Polymère de cyclooléfines susceptible d'être obtenu par polymérisation de 0,1% à 100% en poids de norbornène et de 0 à 99,9% en poids d'éthylène en solution, en suspension, en masse fondue de monomères ou en phase gazeuse à une température de -20°C à 80°C et à une pression de 0,5 à 64 bars en présence d'un catalyseur, qui est constitué d'un métallocène comme composant de métal de transition et d'un aluminoxane de formule (VII) 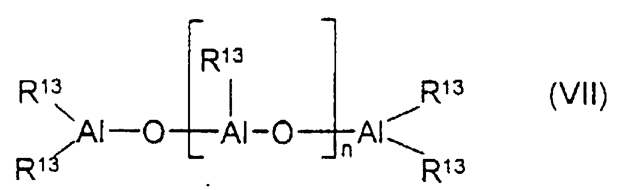 pour le type linéaire et/ou de formule (VIII) 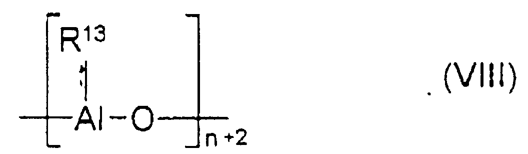 pour le type cyclique, R¹³ signifiant dans les formules VII et VIII un groupement alkyle en C₁-C₆ ou phényle ou benzyle et n étant un nombre entier de 2 à 50, caractérisé en ce que la polymérisation est réalisée en présence d'un catalyseur dont le composant de métal de transition est un composé de formule IX 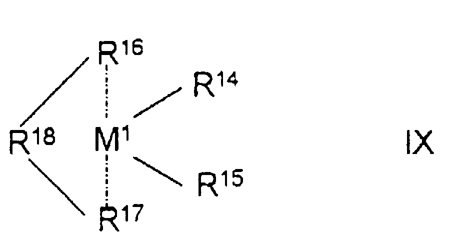 dans laquelle
M¹ est le titane, le zirconium, l'hafnium, le vanadium, le niobium ou le tantale,
R¹⁴ et R¹⁵ sont identiques ou différents et signifient un atome d'hydrogène, un atome d'halogène, un groupement alkyle en C₁-C₁₀, un groupement alcoxy en C₁-C₁₀, un groupement aryle en C₆-C₁₀, un groupement aryloxy en C₆-C₁₀, un groupement alcényle en C₂-C₁₀, un groupement arylalkyle en C₇-C₄₀, un groupement alkylaryle en C₇-C₄₀ ou un groupement arylalcényle en C₈-C₄₀,
R¹⁶ et R¹⁷ sont différents et signifient un radical hydrocarboné à un ou plusieurs noyaux, qui peut former avec l'atome central M¹ une structure en sandwich,
R¹⁸ a pour formules 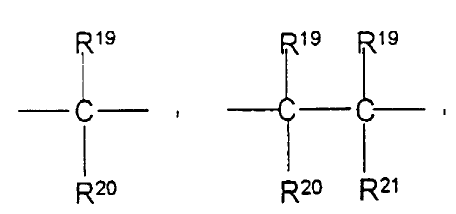 dans lesquelles R¹⁹, R²⁰ et R²¹ sont identiques ou différents et signifient un atome d'halogène, un groupement alkyle en C₁-C₁₀, un groupement fluoralkyle en C₁-C₁₀, un groupement fluoraryle en C₆-C₁₀, un groupement aryle en C₆-C₁₀, un groupement alcoxy en C₁-C₁₀, un groupement alcényle en C₂-C₁₀, un groupement arylalkyle en C₇-C₄₀, un groupement arylalcényle en C₈-C₄₀ ou un groupement alkylaryle en C₇-C₄₀, ou R¹⁹ et R²⁰ ou R¹⁹ et R²¹, respectivement, forment un noyau avec les atomes qui les lient.

2. Polymère de cyclooléfines susceptible d'être obtenu par la polymérisation selon la revendication 1, dans lequel la teneur en unités de norbornène est supérieure à 40% en mole.

3. Pièce extrudée contenant au moins un polymère de cyclooléfines selon la revendication 1 ou 2.

4. Pièce moulée par injection contenant au moins un polymère de cyclooléfines selon la revendication 1 ou 2.

5. Alliage polymère contenant au moins un polymère de cyclooléfines selon la revendication 1 ou 2.
